# EUROPÄISCHE PATENTSCHRIFT

(11) **EP 2 489 982 B1**
(45) Veröffentlichungstag und Bekanntmachung des Hinweises auf die Patenterteilung: **23.04.2014**
(21) Anmeldenummer: 11154702.2
(22) Anmeldetag: 16.02.2011
(51) Int. Cl.: G01C 21/36, G01C 21/34

(54) **Verfahren zum Bestimmen einer optimalen Route mittels einer Navigationseinrichtung und Navigationssystem**
Device for determining an optimal route by means of a navigation device and navigation system
Procédé de détermination d'une route optimale à l'aide d'un dispositif de navigation et système de navigation

(43) Veröffentlichungstag der Anmeldung: 22.08.2012
(73) Patentinhaber: TechniSat Digital GmbH, 54550 Daun (DE)
(72) Erfinder: Kolanko, Herr Dipl.Informatiker (FH) Jan, 01157 Dresden (DE)

(56) Entgegenhaltungen:
- EP-A1- 1 327 856
- EP-A1- 1 870 672
- EP-A2- 0 715 289

## Beschreibung

Die Erfindung betrifft ein Verfahren zum Bestimmen einer optimalen Route mittels einer Navigationseinrichtung und ein Navigationssystem.

Herkömmliche Navigationseinrichtungen sind als portable Geräte ausgeführt oder mit einem Fortbewegungsmittel, beispielsweise einem Kraftfahrzeug, einem Schiff oder einem Flugzeug, fest verbunden. Die Navigationseinrichtungen bestimmen auf der Grundlage von Landkartendaten eine optimale Streckenführung bzw. Route, welche von einer Startposition zu einer Zielposition führt.

Die Landkartendaten repräsentieren raumbezogene Objekte und diesen zugeordnete Informationen, beispielsweise Straßen, Wege, Plätze, Eisenbahnlinien, Flüsse, Gebäude, Brücken, Geländeformen, Landesgrenzen, Parkmöglichkeiten, Raststätten, Verkehrsregelungen, Geschwindigkeitsbegrenzungen und Ortschaften. Diese Objekte und Informationen können mithilfe eines Zeichensystems auf einem Bildschirm dargestellt werden, um reale räumliche Verhältnisse für einen Betrachter des Bildschirms verständlich zu machen. Die Landkartendaten sind in der Regel zusammen mit einer Navigationssoftware in einer nichtflüchtigen Speichereinrichtung der Navigationseinrichtung abgelegt, beispielsweise in einem Flash-Speicher.

Die Startposition, welche normalerweise gleichzeitig der Standort eines Benutzers der Navigationseinrichtung zum Zeitpunkt einer Zieleingabe ist, wird meist unter Verwendung eines Navigationssatellitensystems bestimmt, beispielsweise unter Verwendung von GPS oder GLONASS. Dazu empfängt die Navigationseinrichtung mithilfe einer Satellitenantenne die Signale mehrerer geostationärer Satelliten und wertet diese Signale aus.

Üblicherweise muss die Navigationseinrichtung für eine genaue Positionsbestimmung die Signale von mindestens vier Satelliten gleichzeitig empfangen. Jedes dieser Signale enthält die Position des jeweiligen Satelliten und eine Zeitinformation. Aus diesen Daten errechnet die Navigationseinrichtung die vier Signallaufzeiten (von den Satelliten zur Satellitenantenne) und bestimmt darauf basierend ihre Position.

Die Zielposition wird normalerweise aus einem Ziel ermittelt, das der Benutzer der Navigationseinrichtung über eine Eingabeeinrichtung, beispielsweise eine Tastatur oder einen Berührungsbildschirm, oder mittels Sprache in das Navigationsgerät eingibt.

Die Bestimmung der optimalen Route, welche von der Startposition zu der Zielposition führt, kann mittels einer Recheneinheit der Navigationseinrichtung ausgeführt werden, die einen Routenbestimmungsprozess abarbeitet. Die auf diese Weise bestimmte optimale Route ist wegen der beschränkten Leistungsfähigkeit der Navigationseinrichtung und aufgrund der begrenzten zur Routenbestimmung verfügbaren Zeit allerdings nur eine gute bis sehr gute Schätzung.

Nach der Bestimmung der optimalen Route kann die Route oder ein Teil der Route auf einem der Navigationseinrichtung zugeordneten Bildschirm dargestellt werden. Dadurch kann ein Benutzer der Navigationseinrichtung eine räumliche Vorstellung von der Route oder von einem vor ihm liegenden Routenabschnitt entwickeln, was ihm beispielsweise ermöglicht, Fahrmanöver vorausschauend zu planen.

Des Weiteren kann die Navigationseinrichtung über den Bildschirm oder über eine Lautsprecheranlage Fahranweisungen an den Benutzer ausgeben, welche auf der Grundlage einer aktuellen Position der Navigationseinrichtung und der bestimmten Route generiert werden.

Ferner kann eine Neubestimmung einer zu der Zielposition führenden Route erfolgen, wenn die Navigationseinrichtung eine vorher bestimmte optimale Route verlassen hat.

Eine in einem Fortbewegungsmittel, beispielsweise einem Fahrzeug, fest eingebaute Navigationseinrichtung besitzt verschiedene Vorteile gegenüber portablen Navigationsgeräten. So ist eine fest eingebaute Navigationseinrichtung meist besser auf die Fahrzeug-Hardware abgestimmt und kann auf verschiedene Fahrzeuginformationen zugreifen, wodurch die Navigation optimiert wird.

Das Dokument EP1327856 offenbart ein System zur Zielführung eines Fahrzeuges, bei dem eine unter Berücksichtigung von Zusatzinformationen optimale Route ermittelt wird, und zu der optimalen Route Zielführungsinformationen ausgegeben werden, wobei die Zusatzinformationen von einer externen Sendeeinheit empfangen werden und/oder in einem Speicher gespeichert sind, der im Fahrzeug mitgeführt wird. Während der Fahrt wird eine Überprüfung der Sinnhaftigkeit der Routenempfehlung durchgeführt.

Nachteile einer in einem Fahrzeug fest eingebauten Navigationseinrichtung sind allerdings ihre Gebundenheit an das Fahrzeug, ihr hoher Anschaffungspreis und damit einhergehend die geringe Wirtschaftlichkeit ihres Austausches gegen eine neuere und leistungsfähigere Version während der Lebensdauer des Fahrzeugs.

Portable Navigationseinrichtungen und in anderen portablen Geräten, beispielsweise in Mobiltelefonen, integrierte Navigationseinrichtungen bieten oft eine leistungsfähigere Navigation als in Fahrzeugen fest eingebaute Navigationseinrichtungen, da innovative technische Lösungen in die in Kraftfahrzeugen fest eingebauten Navigationseinrichtungen aufgrund langwieriger Qualifizierungsprozesse im Automotive-Bereich normalerweise später Eingang finden als in portable Geräte.

Daher stellt sich die Aufgabe, die Leistungsfähigkeit einer fest in einem Fahrzeug eingebauten Navigationseinrichtung zu erhöhen, wobei insbesondere die Geschwindigkeit und die Qualität der Routenbestimmung gesteigert werden sollen. Dies soll ohne größeren Aufwand, insbesondere ohne einen Austausch von im Fahrzeug eingebauter Hardware, erreicht werden.

Zur Lösung dieser Aufgabe werden das erfindungsgemäße Verfahren zum Bestimmen einer optimalen Route mittels einer Navigationseinrichtung und das erfindungsgemäße Navigationssystem bereitgestellt.

Für das erfindungsgemäße Verfahren werden eine Navigationseinrichtung mit einer ersten Recheneinheit und eine der Navigationseinrichtung zugeordnete externe Einrichtung mit einer zweiten Recheneinheit verwendet. Optional können auch noch weitere der Navigationseinrichtung zugeordnete externe Einrichtungen verwendet werden.

Mittels der Navigationseinrichtung und der externen Einrichtung wird ein Routenbestimmungsprozess ausgeführt, welcher einen ersten Rechenprozess und einen zweiten Rechenprozess aufweist.

Das erfindungsgemäße Verfahren weist folgende Schritte auf:
(a) Festlegen von Eingangsdaten für den ersten Rechenprozess und von Eingangsdaten für den zweiten Rechenprozess mittels der ersten Recheneinheit,
(b) Ausführen des ersten Rechenprozesses unter Verwendung der Eingangsdaten für den ersten Rechenprozess mittels der ersten Recheneinheit, wobei eine erste Route bereitgestellt wird,
(c) Ausführen des zweiten Rechenprozesses unter Verwendung der Eingangsdaten für den zweiten Rechenprozess mittels der zweiten Recheneinheit, wobei eine zweite Route bereitgestellt wird, und
(d) Auswählen der ersten Route oder der zweiten Route als optimale Route mittels der ersten Recheneinheit.

Das erfindungsgemäße Verfahren bietet folgende Vorteile:
Durch das Ausführen des zweiten Rechenprozesses mittels der Recheneinheit der externen Einrichtung wird die Recheneinheit der Navigationseinrichtung von dem zweiten Rechenprozess entlastet und kann zur gleichen Zeit einen anderen Rechenprozess, beispielsweise den ersten Rechenprozess, ausführen. Dadurch können der erste Rechenprozess und der zweite Rechenprozess gleichzeitig, mit anderen Worten parallel, ausgeführt werden.

Damit kann durch die Auslagerung eines Teils der Rechenoperationen auf die externe Einrichtung ein weit größerer Teil des digitalisierten Straßennetzes in der gleichen Zeit betrachtet werden, sodass die Qualität der Routenbestimmung erhöht wird.

Darüber hinaus kann, wenn die Recheneinheit der externen Einrichtung leistungsfähiger als die Recheneinheit der Navigationseinrichtung ist, der zweite Rechenprozess schneller ausgeführt werden. Somit können beide Rechenprozesse auch dann in nahezu gleicher Zeit ausgeführt werden, wenn der zweite Rechenprozess deutlich komplexer als der erste Rechenprozess ist.

Ferner kann, wenn die Recheneinheit der externen Einrichtung leistungsfähiger als die Recheneinheit der Navigationseinrichtung ist, mittels der zweiten Recheneinheit ein Rechenprozess ausgeführt werden, der sich aufgrund seiner Komplexität mittels der ersten Recheneinheit gar nicht ausführen ließe. So kann beispielsweise ein besonders komplexer Rechenprozess ausgeführt werden, der während der Fahrt vorausschauend ständig alternative Routen berechnet, sodass diese bei einem Verlassen der ursprünglich bestimmten optimalen Route kurzfristig zur Verfügung stehen.

Zusammenfassend greift die Navigationseinrichtung auf die zweite Recheneinheit als zusätzliche Ressource zu, wodurch sich die Schnelligkeit und die Qualität der Routenbestimmung erhöhen.

Weitere Ausführungsformen des erfindungsgemäßen Verfahrens sind aus den abhängigen Patentansprüchen ersichtlich.

Das erfindungsgemäße Navigationssystem zum Berechnen einer optimalen Route weist eine Navigationseinrichtung mit einer ersten Recheneinheit und eine der Navigationseinrichtung zugeordnete externe Einrichtung mit einer zweiten Recheneinheit auf. Optional können der Navigationseinrichtung auch noch weitere externe Einrichtungen zugeordnet sein.

Die Navigationseinrichtung und die externe Einrichtung sind zum Ausführen eines Routenbestimmungsprozesses eingerichtet, welcher einen ersten Rechenprozess und einen zweiten Rechenprozess aufweist.

Die erste Recheneinheit ist zum Festlegen von Eingangsdaten des ersten Rechenprozesses und von Eingangsdaten des zweiten Rechenprozesses, zum Ausführen des ersten Rechenprozesses unter Verwendung der Eingangsdaten des ersten Rechenprozesses, wobei eine erste Route bereitgestellt wird, und zum Auswählen einer optimalen Route aus der ersten Route und einer zweiten Route eingerichtet.

Die zweite Recheneinheit ist zum Ausführen des zweiten Rechenprozesses unter Verwendung der Eingangsdaten des zweiten Rechenprozesses, wobei die zweite Route bereitgestellt wird, eingerichtet.

Die vorliegende Erfindung wird anhand von Ausführungsformen weiter erläutert. Dabei stellen die Figuren Folgendes dar:
Figur 1 zeigt eine Navigationseinrichtung, ein Mobiltelefon und einen Tablettrechner, welche entsprechend dem erfindungsgemäßen Verfahren betrieben werden.
Figur 2 zeigt die Navigationseinrichtung, das Mobiltelefon und den Tablettrechner aus Figur 1 und mehrere Module dieser Einrichtungen.
Figur 3 zeigt ein Schema mehrerer alternativer Routen, welche von dem erfindungsgemäßen Navigationssystem im Rahmen eines Routenbestimmungsprozesses berechnet werden.
Figur 4 zeigt ein Gebiet mit einem rechteckförmigen Ausschnitt, dem die zur Berechnung einer alternativen Route verwendeten Landkartendaten zugeordnet sind.

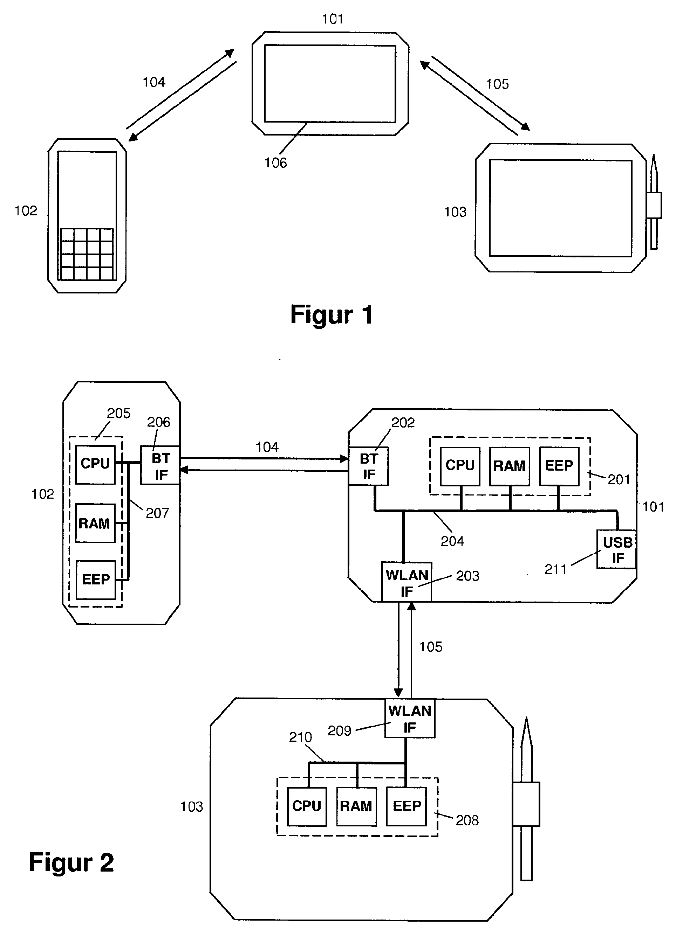

**Figur 1** zeigt eine Navigationseinrichtung 101 und zwei externe Einrichtungen, nämlich ein Mobiltelefon 102 und einen Tablettrechner 103, die sich im Inneren eines Kraftfahrzeugs befinden und entsprechend dem erfindungsgemäßen Verfahren betrieben werden.

Die Navigationseinrichtung weist einen Berührungsbildschirm (Touchscreen) 106 auf, welcher als Anzeige- und Eingabeeinheit dient.

Das Mobiltelefon 102 ist der Navigationseinrichtung 101 zugeordnet und kann mit ihr über eine Bluetooth-Funkverbindung 104 verbunden werden.

Der Tablettrechner 103 ist der Navigationseinrichtung 101 ebenfalls zugeordnet und kann mit ihr über eine WLAN-Funkverbindung 105 verbunden werden.

Optional können der Navigationseinrichtung 101 eine weitere externe Einrichtung oder mehrere weitere externe Einrichtungen zugeordnet sein, die aber in Figur 1 nicht gezeigt sind.

**Figur 2** zeigt die Navigationseinrichtung 101, das Mobiltelefon 102 und den Tablettrechner 103 aus Figur 1 und mehrere Module dieser Einrichtungen.

Die Navigationseinrichtung 101 weist eine erste Recheneinheit 201 auf, welche über eine CPU, einen RAM und einen EEPROM verfügt. In dem EEPROM der Navigationseinrichtung 101 sind unter anderem eine Routenberechnungssoftware und Landkartendaten für das Gebiet Deutschlands abgelegt. Alternativ können die Landkartendaten auch auf einem anderen Speichermedium der Navigationseinrichtung 101, beispielsweise auf einem Speicherstift, auf einer Speicherkarte, auf einer CD-ROM oder auf einer DVD, abgelegt sein.

Ferner sind in der Navigationseinrichtung 101 eine Bluetooth-Schnittstelle 202, eine WLAN-Schnittstelle 203 und eine USB-Schnittstelle 211 integriert. CPU, RAM, EEPROM, Bluetooth-Schnittstelle, WLAN-Schnittstelle und USB-Schnittstelle sind über einen Datenbus 204 miteinander verbunden.

Das Mobiltelefon 102 weist eine zweite Recheneinheit 205 auf, welche über eine CPU, einen RAM und einen EEPROM verfügt. In dem EEPROM des Mobiltelefons 102 ist unter anderem eine Routenberechnungssoftware abgelegt. Hervorzuheben ist, dass in dem EEPROM des Mobiltelefons 102 keine Landkartendaten gespeichert sind. Ferner ist in dem Mobiltelefon 102 eine Bluetooth-Schnittstelle 206 integriert. CPU, RAM, EEPROM und Bluetooth-Schnittstelle sind über einen Datenbus 207 miteinander verbunden.

Der Tablettrechner 103 weist eine dritte Recheneinheit 208 auf, welche über eine CPU, einen RAM und einen EEPROM verfügt. Anstelle des EEPROMs kann der Tablettrechner auch über eine Festplatte verfügen. In dem EEPROM des Tablettrechners 103 sind unter anderem eine Routenberechnungssoftware und die gleichen Landkartendaten für das Gebiet Deutschlands abgelegt, wie im EEPROM der Navigationseinrichtung 101. Ferner ist in dem Tablettrechner 103 eine WLAN-Schnittstelle 209 integriert. CPU, RAM, EEPROM und WLAN-Schnittstelle sind über einen Datenbus 210 miteinander verbunden.

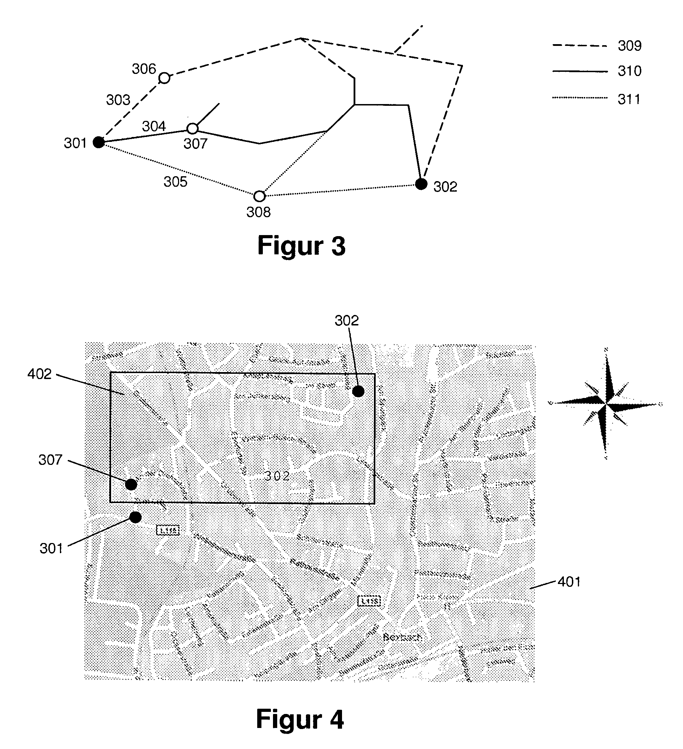

**Figur 3** verdeutlicht die Berechnung einer optimalen Route mittels der Navigationseinrichtung 101, dem Mobiltelefon 102 und dem Tablettrechner 103 aus den Figuren 1 und 2.

Nach dem Einschalten der Navigationseinrichtung 101 ermittelt diese die in ihrer Nähe befindlichen externen Einrichtungen, welche die unten genannten Kriterien (a) und (b) erfüllen. Alternativ kann die Navigationseinrichtung 101 diese Einrichtungen auch zu einem anderen Zeitpunkt ermitteln, beispielsweise nach dem Eingeben eines Ziels in die Navigationseinrichtung 101.
(a) Über eine der Schnittstellen 202, 203 und 211 der Navigationseinrichtung 101 ist ein Datenaustausch mit der jeweiligen externen Einrichtung möglich.
(b) Die jeweilige externe Einrichtung verfügt über eine Recheneinheit mit freier Rechen kapazität.

Im vorliegenden Fall erfüllen das Mobiltelefon 102 und der Tablettrechner 103 die Kriterien (a) und (b). Somit stehen insgesamt drei Recheneinheiten für das Ausführen von Rechenprozessen zur Verfügung, nämlich die Recheneinheiten 201, 205 und 208. Informationen über die ermittelten externen Einrichtungen 102, 103 und deren Recheneinheiten 205, 208 können im EEPROM der Navigationseinrichtung 101 abgelegt werden.

Sollten dagegen keine Einrichtungen bestimmt werden können, welche die oben genannten Kriterien (a) und (b) erfüllen, müssten alle im Rahmen des Routenbestimmungsprozesses anfallenden Rechenprozesse mittels der Recheneinheit 201 der Navigationseinrichtung 101 ausgeführt werden.

Anschließend wird von der Navigationseinrichtung 101 eine Zielposition 302 aus einem Ziel bestimmt, welches ein Benutzer der Navigationseinrichtung 101 über deren Berührungsbildschirm 106 eingibt. Alternativ kann der Benutzer das Ziel auch über eine andere Eingabeeinrichtung, beispielsweise eine Tastatur, oder mittels Sprache eingeben.

Danach wird eine Startposition 301, welche gleichzeitig der Standort des Benutzers der Navigationseinrichtung 101 zum Zeitpunkt der Zieleingabe ist, unter Verwendung des Navigationssatellitensystems GPS bestimmt. Hierfür ist die Navigationseinrichtung 101 mit einer GPS-Antenne (nicht dargestellt) ausgestattet.

Startposition 301 und Zielposition 302 werden jeweils in Form von Positionsdaten im EEPROM der Navigationseinrichtung 101 abgelegt.

Zur Bestimmung der optimalen Route, welche von der Startposition 301 zu der Zielposition 302 führt, wird dann der folgende Routenbestimmungsprozess ausgeführt:
Zunächst werden mittels der ersten Recheneinheit 201 auf der Grundlage der Startposition 301, der Zielposition 302 und der Landkartendaten für Deutschland drei Routenabschnitte 303, 304 und 305 berechnet, welche jeweils von der Startposition 301 zu einer der Zwischenpositionen 306, 307 und 308 führen. Die drei Routenabschnitte 303, 304 und 305 repräsentieren jeweils den Anfangsabschnitt einer möglichen alternativen Route.

Im vorliegenden Fall entspricht die Anzahl der berechneten Routenabschnitte der Anzahl der zur Verfügung stehenden Recheneinheiten 201, 205 und 208. Alternativ kann aber auch eine andere Anzahl von zu berechnenden Routenabschnitten gewählt werden, wobei die Anzahl der berechneten Routenabschnitte an der Anzahl oder der Leistungsfähigkeit der zur Verfügung stehenden Recheneinheiten orientiert sein kann.

Danach werden mittels der ersten Recheneinheit 201 unter Verwendung der Zwischenpositionen 306, 307 und 308 und der Zielposition 302 drei im Rahmen des Routenbestimmungsprozesses auszuführende Rechenprozesse definiert, wobei jeder der Rechenprozesse einem der Routenabschnitte 303, 304 und 305 zugeordnet ist. Dabei werden für jeden der drei Rechenprozesse mehrere Eingangsdaten festgelegt, die in der folgenden Tabelle gezeigt sind. Außerdem wird jeder der drei Rechenprozesse einer der Einrichtungen 101, 102 und 103 gemäß der Tabelle zugeordnet.

| **Nr. des Rechen-prozesses** | **zugeordneter Routenabschnitt** | **Eingangsdaten (u. a.)** | **zugeordnete Einrichtung** |
|---|---|---|---|
| 1 | 303 | Zwischenposition 306, | Navigationseinrichtung 101 |
| | | Zielposition 302, | |
| | | Landkartendaten für Deutschland | |
| 2 | 304 | Zwischenposition 307, | Mobiltelefon 102 (extern) |
| | | Zielposition 302, | |
| | | Landkartendaten für einen ausgewählten Ausschnitt Deutschlands | |
| 3 | 305 | Zwischenposition 308, | Tablettrechner 103 (extern) |
| | | Zielposition 302, | |
| | | Landkartendaten für Deutschland | |

Die Rechenprozesse können entsprechend der Leistungsfähigkeit der zur Verfügung stehenden Recheneinheiten definiert werden.

Beispielsweise können, wenn besonders leistungsfähige Recheneinheiten bereitstehen, besonders komplexe Rechenprozesse definiert werden. Das heißt, die Komplexität der Rechenprozesse kann an die Leistungsfähigkeit der Recheneinheiten angepasst werden. Die Komplexität eines Rechenprozesses hängt beispielsweise von einer Anzahl der im Rahmen des Rechenprozesses untersuchten Straßenabzweigungen ab und kann durch Rechenprozessparameter vorgegeben werden, die dem Rechenprozess zugeordnet sind.

Ferner können besonders komplexe Rechenprozesse den zur Verfügung stehenden besonders leistungsfähigen Recheneinheiten zugeordnet werden. Mit anderen Worten kann die Zuordnung der Rechenprozesse zu den einzelnen Recheneinheiten entsprechend der Komplexität eines jeweiligen Rechenprozesses und der Leistungsfähigkeit einer jeweiligen Recheneinheit erfolgen.

Wie in der obigen Tabelle gezeigt, beinhaltet im vorliegenden Fall der erste der drei Rechenprozesse die Berechnung einer dem Routenabschnitt 303 zugeordneten ersten Route 309 auf der Grundlage der Zwischenposition 306, der Zielposition 302 und der Landkartendaten für das Gebiet Deutschlands mittels der Navigationseinrichtung 101 bzw. deren Recheneinheit 201.

Der zweite der drei Rechenprozesse beinhaltet die Berechnung einer dem Routenabschnitt 304 zugeordneten zweiten Route 310 auf der Grundlage der Zwischenposition 307, der Zielposition 302 und von Landkarten eines ausgewählten Ausschnitts des Gebiets Deutschlands mittels dem Mobiltelefon 102 bzw. dessen Recheneinheit 205.

Bezugnehmend auf **Figur 4** wird im Folgenden das Auswählen des Ausschnitts des Gebiets Deutschlands als Eingangsgröße für den zweiten Rechenprozess erläutert.

Das Auswählen des Ausschnitts des Gebiets Deutschlands findet im Rahmen des Definierens des zweiten Rechenprozesses statt. Seine Notwendigkeit ergibt sich daraus, dass dem Mobiltelefon 102 geeignete Landkartendaten für den zweiten Rechenprozess zur Verfügung gestellt werden müssen, da das Mobiltelefon 102 nicht selbst über Landkartendaten verfügt. Die Menge der an das Mobiltelefon 102 übertragenen Landkartendaten muss wegen der begrenzten Bandbreite der Bluetooth-Funkverbindung möglichst klein sein, sodass eine Übertragung innerhalb eines schmalen Zeitfensters möglich ist.

Gezeigt ist ein Bereich 401 des Gebiets Deutschlands in Form einer Landkarte. Die Beschränkung auf diesen Bereich anstelle einer Landkarte ganz Deutschlands erfolgt in Figur 4 lediglich aus darstellungstechnischen Gründen.

Weiterhin sind die Startposition 301, die Zwischenposition 307 und die Zielposition 302 dargestellt. Das Auswählen eines Ausschnitts des Gebiets Deutschlands wird nun derart durchgeführt, dass ein in Nord-Süd-Richtung ausgerichtetes Viereck gebildet wird, in welchem die Zwischenposition 307 und die Zielposition 302 angeordnet sind, wobei jede dieser Positionen in der Nähe einer Ecke des Vierecks platziert ist. Der von dem Viereck umschlossene Bereich wird als Ausschnitt 402 ausgewählt.

Alternativ kann der Ausschnitt auch anders ausgerichtet sein, beispielsweise in Nordwest-Südost-Richtung. Außerdem kann der Ausschnitt auch eine andere Form aufweisen, beispielsweise die Form einer Ellipse oder eines Polygons. Weiterhin kann der Ausschnitt derart gestaltet und angeordnet sein, dass ein von dem Benutzer der Navigationseinrichtung 101 festgelegtes Zwischenziel in dem Ausschnitt angeordnet ist.

Das oben beschriebene Auswählen eines Ausschnitts aus dem Gebiet Deutschlands unter Verwendung der Startposition 301 und der Zielposition 302 hat den Vorteil, dass nur eine geringe Menge von Landkartendaten, nämlich die dem Ausschnitt 402 zugeordneten Landkartendaten, an das Mobiltelefon 102 übertragen werden muss. Dies ist besonders bei der Verwendung externer Einrichtungen vorteilhaft, die über eine schmalbandige Datenverbindung mit der Navigationseinrichtung verbunden sind oder nur über eine geringe Speicherkapazität für Landkartendaten verfügen.

Wieder bezugnehmend auf **Figur 3** beinhaltet der dritte der drei Rechenprozesse die Berechnung einer dem Routenabschnitt 305 zugeordneten dritten Route 311 auf der Grundlage der Zwischenposition 308, der Zielposition 302 und von Landkarten des Gebiets Deutschlands mittels dem Tablettrechner 103 bzw. dessen Recheneinheit 208.

Anschließend werden die für den zweiten Rechenprozess benötigten Eingangsdaten über die Bluetooth-Funkverbindung 104 an das Mobiltelefon 102 gesendet. Zu diesen Eingangsdaten gehören die Zwischenposition 307, die Zielposition 302 und die Landkartendaten des ausgewählten Ausschnitts des Gebiets Deutschlands.

Hervorzuheben ist, dass die Landkartendaten des ausgewählten Ausschnitts des Gebiets Deutschlands nur deshalb an das Mobiltelefon 102 gesendet werden, weil dort im Unterschied zu den anderen Einrichtungen 101, 103 keine Landkartendaten vorliegen.

Zu den über die Bluetooth-Funkverbindung 104 an das Mobiltelefon 102 gesendeten Eingangsdaten können weitere Daten gehören, beispielsweise Verkehrsfunk-Informationen, vom Benutzer der Navigationseinrichtung 101 vorgegebene Sperranweisungen, gemäß denen bestimmte Straßen gemieden werden sollen, oder Rechenprozessparameter, welche die Komplexität des zweiten Rechenprozesses festlegen.

Die an das Mobiltelefon 102 gesendeten Eingangsdaten können im EEPROM des Mobiltelefons 102 abgelegt werden.

Ferner werden die für den dritten Rechenprozess benötigten Eingangsdaten über die WLAN-Funkverbindung 105 an den Tablettrechner 103 gesendet. Zu diesen Eingangsdaten gehören die Zwischenposition 308 und die Zielposition 302. Die Übertragung von Landkartendaten an den Tablettrechner 103 ist nicht notwendig, da bereits die gleichen Landkartendaten für das Gebiet Deutschlands in dem EEPROM des Tablettrechners 103 abgelegt sind, wie im EEPROM der Navigationseinrichtung 101.

Zu den über die WLAN-Funkverbindung 105 an den Tablettrechner 103 gesendeten Eingangsdaten können weitere Daten gehören, beispielsweise Verkehrsfunk-Informationen, vom Benutzer der Navigationseinrichtung 101 vorgegebene Sperranweisungen, gemäß denen bestimmte Straßen gemieden werden sollen, oder Rechenprozessparameter, welche die Komplexität des dritten Rechenprozesses festlegen.

Die an den Tablettrechner 103 gesendeten Eingangsdaten können im EEPROM des Tablettrechners 103 abgelegt werden.

Dann wird mittels der in der Navigationseinrichtung 101 integrierten ersten Recheneinheit 201 der erste Rechenprozess ausgeführt, wobei die Routenberechnungssoftware der Navigationseinrichtung 101, die Landkartendaten für das Gebiet Deutschlands, die Zwischenposition 306 und Zielposition 302 verwendet werden. Als Rechenergebnis des ersten Rechenprozesses wird eine erste Route 309 bereitgestellt. Ferner wird mittels der ersten Recheneinheit 201 eine der ersten Route 309 zugeordnete erste voraussichtliche Fahrzeit berechnet.

Die erste Route 309 kann in Form von Routendaten zusammen mit der ersten voraussichtlichen Fahrzeit im EEPROM der Navigationseinrichtung 101 abgelegt werden.

Gleichzeitig wird mittels der in dem Mobiltelefon 102 integrierten zweiten Recheneinheit 205 der zweite Rechenprozess ausgeführt, wobei die Routenberechnungssoftware des Mobiltelefons 102, die Landkartendaten für den Ausschnitt des Gebiets Deutschlands, die Zwischenposition 307 und die Zielposition 302 verwendet werden. Zusätzlich können für den zweiten Rechenprozess weitere Daten oder Informationen verwendet werden, beispielsweise Verkehrsfunk-Informationen, vom Benutzer der Navigationseinrichtung vorgegebene Sperranweisungen, gemäß denen bestimmte Straßen gemieden werden sollen, oder Rechenprozessparameter.

Als Rechenergebnis des zweiten Rechenprozesses wird eine zweite Route 310 bereitgestellt. Ferner wird mittels der zweiten Recheneinheit 205 eine der zweiten Route 310 zugeordnete zweite voraussichtliche Fahrzeit berechnet.

Die zweite Route 310 kann in Form von Routendaten zusammen mit der zweiten Fahrzeit im EEPROM des Mobiltelefons 102 abgelegt werden.

Parallel dazu wird mittels der in dem Tablettrechner 103 integrierten dritten Recheneinheit 208 der dritte Rechenprozess ausgeführt, wobei die Routenberechnungssoftware des

Tablettrechners 103, die Landkartendaten für das Gebiet Deutschlands, die Zwischenposition 308 und die Zielposition 302 verwendet werden. Zusätzlich können für den dritten Rechenprozess auch weitere Daten oder Informationen verwendet werden, beispielsweise Verkehrsfunk-Informationen, vom Benutzer der Navigationseinrichtung vorgegebene Sperranweisungen, gemäß denen bestimmte Straßen gemieden werden sollen, oder Rechenprozessparameter. Als Rechenergebnis des dritten Rechenprozesses wird eine dritte Route 311 bereitgestellt. Ferner wird mittels der dritten Recheneinheit 208 eine der dritten Route 311 zugeordnete dritte voraussichtliche Fahrzeit berechnet.

Die dritte Route 311 kann in Form von Routendaten zusammen mit der dritten voraussichtlichen Fahrzeit im EEPROM des Tablettrechners 103 abgelegt werden.

Alternativ zu der oben beschriebenen Vorgehensweise, jede der drei alternativen Routen 309, 310 und 311 ausgehend von einer anderen der drei Zwischenpositionen 306, 307 und 308 zu berechnen, können auch mehrere alternative Routen ausgehend von der gleichen Zwischenposition berechnet werden. Hierbei unterscheiden sich die zur Berechnung der alternativen Routen verwendeten Rechenprozesse beispielsweise hinsichtlich ihrer Komplexität.

Danach wird die voraussichtliche Fahrzeit der zweiten Route über die Bluetooth-Funkverbindung 104 von dem Mobiltelefon 102 an die Navigationseinrichtung 101 übertragen. Außerdem wird die voraussichtliche Fahrzeit der dritten Route 311 über die WLAN-Funkverbindung 105 von dem Tablettrechner 103 an die Navigationseinrichtung 101 übertragen.

In einem nächsten Schritt wird mittels der Recheneinheit 201 der Navigationseinrichtung 101 eine der drei Routen 309, 310 und 311 unter Verwendung der ersten voraussichtlichen Fahrzeit, der zweiten voraussichtlichen Fahrzeit und der dritten voraussichtlichen Fahrzeit als optimale Route ausgewählt. Im vorliegenden Fall wird die dritte Route 311 aufgrund ihrer im Vergleich mit den anderen Routen 309 und 310 kürzeren voraussichtlichen Fahrzeit als optimale Route ausgewählt.

Damit ist der Routenbestimmungsprozess abgeschlossen.

Alternativ können anstelle der voraussichtlichen Fahrzeiten auch andere Werte zum Auswählen der optimalen Route aus mehreren berechneten Routen verwendet werden, beispielsweise voraussichtliche Kraftstoffverbräuche oder eine Kombination aus voraussichtlichen Fahrzeiten und voraussichtlichen Kraftstoffverbräuchen.

Dann wird die dritte Route 311 von dem Tablettrechner 103 über die WLAN-Funkverbindung 105 zu der Navigationseinrichtung 101 übertragen, wonach der dritten Route 311 zugeordnete Zielführungsinformationen an den Benutzer der Navigationseinrichtung 101 ausgegeben werden können.

Gemäß einer vorteilhaften Ausführungsform der Erfindung wird nach dem Definieren des ersten Rechenprozesses mittels der ersten Recheneinheit 201 eine Timeout-Zeit festgelegt, welche beispielsweise der voraussichtlichen Dauer des ersten Rechenprozesses entspricht. Die Timeout-Zeit wird zusammen mit den Eingangsdaten des zweiten Rechenprozesses zu dem Mobiltelefon 102 übertragen. Außerdem wird die Timeout-Zeit zusammen mit den Eingangsdaten des dritten Rechenprozesses zu dem Tablettrechner 103 übertragen.

Wenn der zweite Rechenprozess die Timeout-Zeit überschreitet, wird er abgebrochen, wodurch möglicherweise keine zweite alternative Route bereitgestellt wird. Alternativ dazu wird der zweite Rechenprozess nur dann abgebrochen, wenn er die Timeout-Zeit überschreitet und zu diesem Zeitpunkt der erste Rechenprozess bereits abgeschlossen ist. Letzteres kann mittels einer Abfrage des Mobiltelefons 102 an die Navigationseinrichtung 101 geprüft werden.

In gleicher Weise wird der dritte Rechenprozess abgebrochen, wenn er die Timeout-Zeit überschreitet, wodurch möglicherweise keine dritte alternative Route bereitgestellt wird. Alternativ dazu wird der dritte Rechenprozess nur dann abgebrochen, wenn er die Timeout-Zeit überschreitet und zu diesem Zeitpunkt der erste Rechenprozess bereits abgeschlossen ist. Letzteres kann mittels einer Abfrage des Tablettrechners 103 an die Navigationseinrichtung 101 geprüft werden.

Die optimale Route wird aus den verbleibenden alternativen Routen ausgewählt. Auf diese Weise kann die optimale Route auch dann bestimmt werden, wenn eine der externen Einrichtungen keine alternative Route bereitgestellt hat, beispielsweise weil ein der Einrichtung zugeordneter Rechenprozess abgebrochen wurde oder die Einrichtung während des Ausführens des Rechenprozesses ausgefallen ist.

Auf der Basis dieser Vorgehensweise kann das oben beschriebene Anpassen der Komplexität von Rechenprozessen an die Leistungsfähigkeit der Recheneinheiten folgendermaßen realisiert werden:
Wird ein mittels der Recheneinheit einer externen Einrichtung ausgeführter Rechenprozess wegen Überschreitung der Timeout-Zeit abgebrochen, wird die Komplexität des nächsten mittels dieser Recheneinheit auszuführenden Rechenprozesses gegenüber dem ursprünglichen Rechenprozess vermindert, beispielsweise durch das Vorgeben entsprechender Rechenprozessparameter.

Wird dagegen ein mittels der Recheneinheit einer externen Einrichtung ausgeführter Rechenprozess nicht wegen Überschreitung der Timeout-Zeit abgebrochen, kann die Komplexität des nächsten mittels dieser Recheneinheit auszuführenden Rechenprozesses durch das Vorgeben entsprechender Rechenprozessparameter gegenüber dem ursprünglichen Rechenprozess erhöht werden.

## Patentansprüche

1. Verfahren zum Bestimmen einer optimalen Route mittels einer Navigationseinrichtung (101), welche eine erste Recheneinheit (201) aufweist,
wobei der Navigationseinrichtung (101) eine externe Einrichtung (102, 103) zugeordnet ist, welche eine zweite Recheneinheit (205, 208) aufweist,
wobei mittels der Navigationseinrichtung (101) und der externen Einrichtung (102, 103) ein Routenbestimmungsprozess ausgeführt wird, welcher einen ersten Rechenprozess und einen zweiten Rechenprozess aufweist,
wobei das Verfahren die folgenden Schritte aufweist:
Festlegen von Eingangsdaten für den ersten Rechenprozess und von Eingangsdaten für den zweiten Rechenprozess mittels der ersten Recheneinheit (201),
Ausführen des ersten Rechenprozesses unter Verwendung der Eingangsdaten für den ersten Rechenprozess mittels der ersten Recheneinheit (201), wobei eine erste Route (309) bereitgestellt wird,
Ausführen des zweiten Rechenprozesses unter Verwendung der Eingangsdaten für den zweiten Rechenprozess mittels der zweiten Recheneinheit (205, 208), wobei eine zweite Route (310, 311) bereitgestellt wird, und
Auswählen von einer von der ersten Route (309) und der zweiten Route (310, 311) als optimale Route mittels der ersten Recheneinheit (201).

2. Verfahren gemäß Anspruch 1,
wobei basierend auf der ersten Route (309) ein der ersten Route (309) zugeordneter erster Wert bereitgestellt wird,
basierend auf der zweiten Route (310, 311) ein der zweiten Route (310, 311) zugeordneter zweiter Wert bereitgestellt wird und
eine von der ersten Route (309) und der zweiten Route (310, 311) unter Verwendung des ersten Werts und des zweiten Werts ausgewählt wird.

3. Verfahren gemäß Anspruch 2,
wobei der zweite Wert mittels der zweiten Recheneinheit (205, 208) bereitgestellt und von der externen Einrichtung (102, 103) zu der Navigationseinrichtung (101) übertragen wird.

4. Verfahren gemäß einem der vorhergehenden Ansprüche,
wobei die Navigationseinrichtung (101) Landkartendaten aufweist, welche einem Gebiet zugeordnet sind,
wobei das Verfahren die zusätzlichen Schritte aufweist:
Bestimmen einer Zielposition (302),
Bestimmen einer Startposition (301),
Festlegen eines Ausschnitts (402) aus dem Gebiet unter Verwendung der Startposition (301) und der Zielposition (302) und
Übertragen derjenigen der Landkartendaten, welche dem Ausschnitt (402) zugeordnet sind, von der Navigationseinrichtung (101) zu der externen Einrichtung (102, 103).

5. Verfahren gemäß Anspruch 4,
wobei die Startposition (301) und die Zielposition (302) in dem Ausschnitt (402) angeordnet sind.

6. Verfahren gemäß einem der Ansprüche 4 oder 5,
wobei der Ausschnitt (402) eine rechteckige Gestalt, eine ellipsenförmige Gestalt oder eine polygonförmige Gestalt aufweist.

7. Verfahren gemäß einem der vorhergehenden Ansprüche,
wobei der erste Rechenprozess der ersten Recheneinheit (201) oder der zweiten Recheneinheit (205, 208) zugeordnet wird und
der zweite Rechenprozess der ersten Recheneinheit (201) oder der zweiten Recheneinheit (205, 208) zugeordnet wird,
wobei die Zuordnung unter Verwendung der Komplexität des jeweiligen Rechenprozesses und der Leistungsfähigkeit der jeweiligen Recheneinheit (201, 205, 208) vorgenommen wird.

8. Verfahren gemäß einem der vorhergehenden Ansprüche,
wobei der erste Rechenprozess und der zweite Rechenprozess zumindest teilweise gleichzeitig ausgeführt werden.

9. Verfahren gemäß einem der vorhergehenden Ansprüche,
wobei die optimale Route ausgewählt wird unter Verwendung von
einer voraussichtlichen Fahrzeit der ersten Route (309) und einer voraussichtlichen Fahrzeit der zweiten Route (310, 311),
einem voraussichtlichen Kraftstoffverbrauch der ersten Route (309) und einem voraussichtlichen Kraftstoffverbrauch der zweiten Route (310, 311) oder
einer voraussichtlichen Fahrzeit der ersten Route (309), einer voraussichtlichen Fahrzeit der zweiten Route (310, 311), einem voraussichtlichen Kraftstoffverbrauch der ersten Route (309) und einem voraussichtlichen Kraftstoffverbrauch der zweiten Route (310, 311).

10. Verfahren gemäß einem der vorhergehenden Ansprüche,
wobei die Navigationseinrichtung (101) und die externe Einrichtung (102, 103) über eine kabelgebundene Datenverbindung oder über eine Funk-Datenverbindung miteinander verbunden sind.

11. Verfahren gemäß einem der vorhergehenden Ansprüche,
wobei die Navigationseinrichtung (101) und die externe Einrichtung (102, 103) in demselben Fahrzeug angeordnet sind.

12. Navigationssystem zum Berechnen einer optimalen Route,
welches eine Navigationseinrichtung (101) mit einer ersten Recheneinheit (201) und eine der Navigationseinrichtung (101) zugeordnete externe Einrichtung (102, 103) mit einer zweiten Recheneinheit (205, 208) aufweist,
wobei die Navigationseinrichtung (101) und die externe Einrichtung (102, 103) zum Ausführen eines Routenbestimmungsprozesses eingerichtet sind, welcher einen ersten Rechenprozess und einen zweiten Rechenprozess aufweist,
die erste Recheneinheit (201) zum Festlegen von Eingangsdaten des ersten Rechenprozesses und von Eingangsdaten des zweiten Rechenprozesses, zum Ausführen des ersten Rechenprozesses unter Verwendung der Eingangsdaten des ersten Rechenprozesses, wobei eine erste Route (309) bereitgestellt wird, und zum Auswählen einer optimalen Route aus der ersten Route (309) und einer zweiten Route (310, 311) eingerichtet ist und
die zweite Recheneinheit (205, 208) zum Ausführen des zweiten Rechenprozesses unter Verwendung der Eingangsdaten des zweiten Rechenprozesses, wobei die zweite Route (310, 311) bereitgestellt wird, eingerichtet ist.

## Claims

1. Method for determining an optimal route by a navigation device (101) which comprises a first computing unit (201),
wherein an external device (102, 103) comprising a second computing unit (205, 208) is assigned to the navigation device (101),
wherein a route determining process comprising a first computing process and a second computing process is executed by the navigation device (101) and the external device (102, 103),
wherein the method comprises the steps:
defining input data for the first computing process and input data for the second computing process by the first computing unit (201),
executing the first computing process using the input data for the first computing process by the first computing unit (201) wherein a first route (309) is provided,
executing the second computing process using the input data for the second computing process by the second computing unit (205, 208) wherein a second route (310, 311) is provided, and
selecting one of the first route (309) and the second route (310, 311) as optimal route by the first computing unit (201).

2. Method according to claim 1,
wherein a first value assigned to the first route (309) is provided based on the first route (309),
a second value which is assigned to the second route (310, 311) is provided based on the second route (310, 311), and
one of the first route (309) and the second route (310, 311) is selected using the first value and the second value.

3. Method according to claim 2,
wherein the second value is provided by the second computing unit (205, 208) and the second value is transmitted from the external device (102, 103) to the navigation device (101).

4. Method according to one of the preceding claims,
wherein the navigation device (101) comprises map data assigned to an area,
wherein the method comprises the additional steps:
determining a target position (302),
determining a start position (301),
defining a section (402) of the area using the start position (301) and the target position (302) and
transmitting those of the map data which are assigned to the section (402) from the navigation device (101) to the external device (102).

5. Method according to claim 4,
wherein the start position (301) and the target position (302) are arranged in the section (402).

6. Method according to one of the claims 4 and 5,
wherein the section (402) comprises a rectangular shape, an elliptical shape or a polygonal shape.

7. Method according to one of the preceding claims,
wherein the first computing process is assigned to the first computing unit (201) or to the second computing unit (205, 208) and
the second computing process is assigned to the first computing unit (201) or to the second computing unit (205, 208),
wherein the assignment is made using the complexity of the respective computing process and the capacity of the respective computing unit (201, 205, 208).

8. Method according to one of the preceding claims,
wherein the first computing process and the second computing process are executed simultaneously at least in part.

9. Method according to one of the preceding claims,
wherein the optimal route is selected using
an expected driving time of the first route (309) and an expected driving time of the second route (310, 311),
an expected fuel consumption of the first route (309) and an expected fuel consumption of the second route (310, 311), or
an expected driving time of the first route (309), an expected driving time of the second route (310, 311), an expected fuel consumption of the first route (309), and an expected fuel consumption of the second route (310, 311).

10. Method according to one of the preceding claims,
wherein the navigation device (101) and the external device (102, 103) are interconnected via a wired data link or via a wireless data link.

11. Method according to one of the preceding claims,
wherein the navigation device (101) and the external device (102, 103) are arranged in the same vehicle.

12. Navigation system for computing an optimal route which comprises a navigation device (101) with a first computing unit (201) and an external device (102, 103) assigned to the navigation device (101) with a second computing unit (205, 208),
wherein the navigation device (101) and the external device (102, 103) are arranged for executing a route determining process which comprises a first computing process and a second computing process,
the first computing device (201) is arranged for defining input data of the first computing process and for defining input data of the second computing process, for executing the first computing process using the input data of the first computing process wherein a first route (309) is provided, and for selecting an optimal route from the first route (309) and a second route (310, 311) and
the second computing device (205, 208) is arranged for executing the second computing process using the input data of the second computing process wherein the second route (310, 311) is provided.

## Revendications

1. Procédé permettant de déterminer l'itinéraire optimal avec un dispositif de navigation (101) comportant une première unité de calcul (201),
un dispositif externe (102, 103) contenant une seconde unité de calcul (205, 208) étant affecté au dispositif de navigation (101),
le dispositif de navigation (101) et le dispositif externe (102, 103) étant utilisés pour un processus de calcul d'itinéraire composé d'un premier processus de calcul et d'un second processus de calcul,
**caractérisé en ce que** le procédé est constitué des étapes suivantes :
définition des données d'entrée du premier processus de calcul et des données d'entrée du second processus de calcul par la première unité de calcul (201),
exécution par la première unité de calcul (201) du premier processus de calcul avec les données d'entrée définies pour le premier processus de calcul, et mise à disposition du premier itinéraire (309),
exécution par la seconde unité de calcul (205, 208) du second processus de calcul avec les données d'entrée définies pour le second processus de calcul, et mise à disposition du second itinéraire (310, 311), et
choix de l'itinéraire optimal entre le premier itinéraire (309) et le second itinéraire (310, 311) par la première unité de calcul (201).

2. Procédé selon la revendication 1,
**caractérisé en ce qu'**une première valeur affectée au premier itinéraire (309) est fournie sur la base du premier itinéraire (309),
qu'une seconde valeur affectée au second itinéraire (310, 311) est fournie sur la base du second itinéraire (310, 311), et
que le premier itinéraire (309) ou le second itinéraire (310, 311) est choisi sur la base de la première valeur et de la seconde valeur.

3. Procédé selon la revendication 2,
**caractérisé en ce que** la seconde valeur est fournie par la seconde unité de calcul (205, 208) et transmise au dispositif de navigation (101) par le dispositif externe (102, 103).

4. Procédé selon l'une des revendications précédentes,
**caractérisé en ce que** le dispositif de navigation (101) possède des données cartographiques correspondant à une zone,
le procédé étant constitué des étapes supplémentaires suivantes :
détermination de la position de destination (302),
détermination de la position de départ (301),
définition d'un extrait (402) de la zone, basé sur la position de départ (301) et la position de destination (302), et
transmission des données cartographiques correspondant à l'extrait (402) au dispositif externe (102, 103) par le dispositif de navigation (101).

5. Procédé selon la revendication 4,
**caractérisé en ce que** la position de départ (301) et la position de destination (302) sont situées dans l'extrait (402).

6. Procédé selon l'une des revendications 4 ou 5,
**caractérisé en ce que** l'extrait (402) est de forme rectangulaire, de forme elliptique ou de forme polygonale.

7. Procédé selon l'une des revendications précédentes,
**caractérisé en ce que** le premier processus de calcul est affecté à la première unité de calcul (201) ou à la seconde unité de calcul (205, 208), et que
le second processus de calcul est affecté à la première unité de calcul (201) ou à la seconde unité de calcul (205, 208),
l'affectation étant définie en fonction de la complexité du processus de calcul respectif et de la puissance de calcul de l'unité de calcul respective (201, 205, 208).

8. Procédé selon l'une des revendications précédentes,
**caractérisé en ce que** le premier processus de calcul et le second processus de calcul sont exécutés simultanément, au moins en partie.

9. Procédé selon l'une des revendications précédentes,
**caractérisé en ce que** l'itinéraire optimal est choisi en fonction
du temps de trajet probable du premier itinéraire (309) et du temps de trajet probable du second itinéraire (310, 311),
de la consommation de carburant probable du premier itinéraire (309) et de la consommation de carburant probable du second itinéraire (310, 311), ou
du temps de trajet probable du premier itinéraire (309), du temps de trajet probable du second itinéraire (310, 311), de la consommation de carburant probable du premier itinéraire (309) et de la consommation de carburant probable du second itinéraire (310, 311).

10. Procédé selon l'une des revendications précédentes,
**caractérisé en ce que** le dispositif de navigation (101) et le dispositif externe (102, 103) sont reliés entre eux par une liaison de données par câble, ou par une liaison de données par ondes radio.

11. Procédé selon l'une des revendications précédentes,
**caractérisé en ce que** le dispositif de navigation (101) et le dispositif externe (102, 103) sont installés dans le même véhicule.

12. Système de navigation servant à calculer un itinéraire optimal,
constitué d'un dispositif de navigation (101) comportant une première unité de calcul (201), et d'un dispositif externe (102, 103) affecté au dispositif de navigation (101), le dispositif externe comportant une seconde unité de calcul (205, 208),
**caractérisé en ce que** le dispositif de navigation (101) et le dispositif externe (102, 103) sont utilisés pour un processus de calcul d'itinéraire composé d'un premier processus de calcul et d'un second processus de calcul,
la première unité de calcul (201) étant configurée pour définir les données d'entrée du premier processus de calcul et les données d'entrée du second processus de calcul, pour exécuter le premier processus de calcul sur la base des données d'entrée du premier processus de calcul et fournir un premier itinéraire (309), et pour choisir l'itinéraire optimal entre le premier itinéraire (309) et un second itinéraire (310, 311), et
la seconde unité de calcul (205, 208) étant configurée pour l'exécution du second processus de calcul sur la base des données d'entrée du second processus de calcul et fournir le second itinéraire (310, 311).
